# FASCICULE DE BREVET EUROPEEN

(11) **EP 2 977 025 B1**
(45) Date de publication et mention de la délivrance du brevet: **06.02.2019**
(21) Numéro de dépôt: 15002423.0
(22) Date de dépôt: 16.07.2015
(51) Int. Cl.: A61C 8/00, A61C 3/02, A61C 13/00

(54) **ENSEMBLE DE TROUSSES D'IMPLANTOLOGIE DENTAIRE**
GESAMTHEIT VON KITS FÜR DENTALE IMPLANTOLOGIE
SET OF DENTAL IMPLANTOLOGY KITS

(30) Priorité: 25.07.2014 CH 11492014
(43) Date de publication de la demande: 27.01.2016
(73) Titulaire: Sudimplant, 31500 Toulouse (FR)
(72) Inventeur: Benhamou, Olivier, 1060 Bruxelles (BE)
(74) Mandataire: Quintelier, Claude

(56) Documents cités:
- EP-A1- 1 849 431
- WO-A1-01/12096
- WO-A1-01/12098
- WO-A1-02/17814
- WO-A1-2007/067105
- US-A1- 2006 078 847

## Description

La présente invention concerne un ensemble de trousses d'implantologie dentaire comprenant un nombre prédéterminé de trousses d'implantologie dentaire, chaque trousse d'implantologie dentaire comprenant un implant dentaire et un transfert d'empreinte servant à reproduire sur un modèle de laboratoire une situation buccale de l'implant après son application sur un patient afin de réaliser un pilier prothétique adapté à l' arcade dentaire du patient.

Un tel ensemble est connu de la demande internationale WO 01/12098. Cet ensemble connu comprend pour chaque trousse un implant dentaire ayant une longueur et une largueur prédéterminées en fonction du type de dents à remplacer immédiatement sur l'arcade dentaire et un transfert d'empreinte pour élaborer ultérieurement la prothèse au laboratoire. En effet suivant l'enseignement de cette demande internationale la mâchoire est divisée en six champs dentaires et une trousse d'implantologie est attribuée à chaque champ dentaire.

Les implants dentaires ostéointégrés sont des supports destinés à créer au niveau des maxillaires des ancrages stables, résistants, efficaces, non iatrogènes, durables, sur lesquels s'adapte une prothèse dentaire fixe ou amovible en vue de redonner au patient une fonction buccale adéquate, un confort satisfaisant et une esthétique. L'ostéointégration est la connexion directe anatomique, biologique et fonctionnelle entre un os vivant et sain et la surface d'un implant dentaire supportant une prothèse dentaire.

L'implantologie est la branche de la chirurgie dentaire qui consiste à poser les implants dentaires. Les médecins spécialistes en chirurgie maxillo-faciale et stomatologie, ainsi que les chirurgiens-dentistes ayant une formation spécialisée dans l'implantologie dentaires sont les seuls habilités à pratiquer ce traitement dentaire.

Un inconvénient de l'ensemble connu est que d'une part il comprend pour chacun des champs dentaires un implant dentaire et un transfert d'empreinte, et d'autre part qu'il impose au spécialiste dentaire d'aller chercher sur le marché d'autres composants chirurgicaux et prothétiques pour finaliser la pose de l'implant et de la prothèse. En général la bioforme de l'implant, c'est-à-dire sa longueur et son diamètre, est essentiellement déterminée par le volume osseux disponible chez le patient concerné à l'endroit où l'implant doit être posé, et moins par la dent même à remplacer. Par ailleurs le fait d'avoir dans l'ensemble pour chaque champs dentaire une trousse particulière laissera donc le spécialiste dentaire avec un grand nombre de trousses inutilisées. De plus l'ensemble connu ne prévoit que le cas où il y a eu extraction de la dent et pas le cas où le patient aurait déjà perdu sa dent.

Des millions de patients à travers le monde ont été traités avec les implants dentaires ostéointégrés, et leur nombre est en croissance de 10 % par an. Il existe plus de 200 systèmes d'implants dentaires différents sur le marché et les trousses chirurgicales et prothétiques ont un grand nombre de packs, c'est-à-dire de pièces et d'outils spécialisés. Les spécialistes dentaires doivent faire face à un très grand choix en matière de packs, les uns plus spécialisés que les autres. Il devient ainsi très difficile pour le spécialiste dentaire de choisir rapidement et correctement, du premier coup et sans erreurs, les packs pour la mise en place d'un implant dentaire et pour le choix de la réhabilitation prothétique qui conviendra le mieux au patient selon le plan de traitement dentaire établi.

En outre, les spécialistes dentaires employant les trousses chirurgicales et prothétiques comprenant cette grande quantité de packs, doivent faire de gros investissements pour l'achat de tout ce matériel et l'équipement de leurs cabinets dentaires. A ces dépenses d'autres coûts s'ajoutent, car tout ce matériel, qui a été exposé à l'air ambiant lors de la sélection des packs pour l'implant dentaire qui correspond au traitement et lors de la mise en place de cet implant, doit être stérilisé ultérieurement. Les étapes de stérilisation présentent aussi l'inconvénient du temps d'attente pour pouvoir réutiliser ce matériel lors d'une intervention suivante, limitant ainsi le nombre d'interventions que le spécialiste peut réaliser durant une journée de travail.

L'invention a pour but de proposer aux praticiens un ensemble de trousses d'implantologie dentaire qui permet dans chacune des trousses d'avoir réunis les composants nécessaire à l'application de l'implant à l'endroit de la mâchoire où l'implant doit être posé, en tenant compte principalement du volume osseux disponible à cet endroit. Le but est donc de pouvoir choisir l'implant à poser indépendamment de la dent manquante ou arrachée, et ainsi de réduire le besoin de spécialisations coûteuses et longues et habiliter les praticiens à poser des implants dentaires tout en réduisant le besoin de gros investissements en matériel.

A cette fin l'ensemble de trousses d'implantologie dentaire suivant l'invention est caractérisé en ce que l'implant dentaire fait partie d'un pack implant et le transfert d'empreinte fait partie d'un pack prothèse, dans chaque trousse d'implantologie dentaire :
- ledit pack implant comprend également:
   - une vis de couverture et une vis de cicatrisation agencées pour être vissées dans l'implant dentaire ;
   - un foret terminal agencé pour perforer dans les os des mâchoires à l'endroit où l'implant dentaire doit être implanté, le foret terminal ayant une dimension compatible à celle de l'implant dentaire ; et
   - un mandrin agencé pour s'insérer dans l'implant dentaire et permettre ainsi la pose de l'implant dans l'os ;
- un pack prothèse comprenant également:
   - un pilier calcinable pourvu d'une partie intra-implantaire agencée pour reproduire la partie destinée à être insérée dans l'implant dentaire, et d'une partie extra-implantaire agencée pour réaliser un pilier prothétique ayant une angulation, une forme et une hauteur adaptée à ladite arcade dentaire ;
   - un pilier prothétique standardisé pour une prothèse fixe ou pour une prothèse amovible et ayant une partie intra-implantaire agencée pour être scellée ou collée dans l'implant dentaire, et une partie extra-implantaire agencée pour y fixer une prothèse dentaire ; et
   - un homologue/analogue de l'implant dentaire agencé pour recevoir la partie intra-implantaire du pilier calcinable ou du pilier prothétique standardisé ;
   à chacune des trousses d'implantologie dentaire est chaque fois attribué un diamètre et une longueur respective de l'implant dentaire, du pilier prothétique et du pilier calcinable sélectionnés parmi un nombre prédéterminé et limité de combinaisons de longueurs et de diamètres d'implant.

L'ensemble de trousses prédéterminé choisi selon des combinaisons de longueurs et de diamètres d'implant, réduit le nombre de packs proposés au dentiste ou au spécialiste dentaire. C'est-à-dire que le choix du dentiste ou du spécialiste dentaire est facilité et dirigé car il lui suffit de choisir entre les packs proposés dans un ensemble de trousses celui qui convient au volume osseux du patient et à la solution prothétique choisie. Il décide de l'implant qui convient au traitement en mesurant le diamètre et la longueur de l'os existant situé à l'endroit où l'implant doit être implanté, et de la solution prothétique fixe ou amovible, selon le plan de traitement envisagé. Une fois qu'il a déterminé ces deux critères, Il est capable de choisir rapidement seul cette trousse qui s'impose dans l'ensemble de trousses prédéterminées, car elles sont groupées par diamètre et longueur de l'implant et par solution prothétique. Les trousses comprises dans l'ensemble rassemblent les packs nécessaires pour répondre aux besoins dans la plupart des cas cliniques et suivant l'invention elles sont combinées comme packs implant et packs prothèse.

L'arrangement des pièces et outils prévus pour l'implantologie dentaire dans les packs implant et les packs prothèse selon l'invention, aide les dentistes ou les spécialistes dentaires à ne pas faire d'erreurs. Un pack implant choisi pour un traitement est lié à un pack prothèse. Le dentiste ou le spécialiste dentaire sait que dans le pack implant il va trouver les éléments concernant l'implant dentaire qui correspondent au besoin du patient (anatomie osseuse), et que dans le pack prothèse, lié au choix de l'implant, il va trouver les éléments qui permettront de recevoir la prothèse conformément au plan de traitement établi. Ceci aide le dentiste ou le spécialiste dentaire à ce qu'il ne puisse pas douter, ni ne puisse se tromper, c'est-à-dire poser un implant dentaire et avoir des éléments prothétiques qui ne correspondent pas à cet implant dentaire choisi. C'est une erreur assez commune, car plusieurs mois passent entre la phase implant et la phase prothèse dans le traitement d'implantologie dentaire, lorsque le dentiste ou spécialiste dentaire voit une grande quantité de patients, et lorsqu'il y a beaucoup de personnes travaillant dans la même équipe, ce n'est pas toujours évident d'avoir les bonnes pratiques de classement et rangement.

Tout ceci fait que le dentiste ou le spécialiste dentaire soit guidé à faire son choix pour un implant dentaire dans l'ensemble de trousses proposées en réduisant le temps que ce choix lui prend, et en réduisant la possibilité d'erreur vu que le nombre de packs est réduit. Ainsi, le pack implant avec une longueur et un diamètre déterminés d'implant, associé au pack prothèse avec une solution prothétique fixe ou amovible, permet d'optimiser la quantité de procédures que le dentiste ou le spécialiste peut réaliser durant une journée de travail, et réduit considérablement l'investissement dans le stock de matériel nécessaire à ces procédures et les sources d'erreurs. Ainsi, il peut commander et acheter seulement la trousse d'implantologie ayant le diamètre et la longueur dont il a besoin pour poser l'implant et la prothèse destinés à son patient, donc une trousse d'implantologie pour un patient.

Ainsi, les traitements d'implantologie dentaire deviennent abordables pour une plus large partie de la population. L'invention permet que le choix des packs soit limité à un ensemble de packs prédéterminés, de ceci il en résulte que le temps de travail du dentiste ou du spécialiste dentaire se voit optimisé en évitant la perte de temps et les erreurs liés au choix du matériel.

La solution proposée dans la demande de brevet internationale WO 01/12098 détourne l'homme du métier de celle proposée par la présente invention. En effet en partant d'un concept où la mâchoire est divisée en champs dentaires, l'art antérieur impose d'avoir une trousse spécifique pour chacun des champs, alors que selon l'invention le spécialiste dentaire est en mesure de choisir pour l'implant ou les implants à placer, seul cette ou ces trousse(s) qui convient au volume osseux disponible auprès de son patient. Comme de plus la trousse comporte l'ensemble des composants, le spécialiste dentaire n'est plus obligé d'aller chercher les autres composants sur le marché, ce qui non seulement lui facilite la tâche, mais également réduit considérablement la probabilité d'erreur. Même si les composants tels que par exemple la vis de couverture, le foret, le pilier prothétique ou l'homologue/analogue de l'implant dentaire sont en tant que tels connus de l'art antérieur, l'homme du métier n'obtient pas en partant de la demande internationale WO 01/12098 un enseignement d'ajouter ces composant aux trousses connues de cette dernière. Ajouter ces composants aux trousses connus de la demande internationale WO 01/12098 aurait comme conséquence qu'elles comprendraient encore davantage de composants qui ne seraient pas utilisés, car elles seraient présentes pour chaque champs dentaire. Le concept suivant la présente invention de grouper l'implant dentaire et le pilier prothétique selon leur longueur et leur diamètre bien défini n'est pas enseigné par l'art antérieur.

Avantageusement, dans l'ensemble de trousses suivant l'invention les combinaisons de longueurs et de diamètres d'implant dentaire et de pilier prothétique sont choisies parmi des implants dentaires et des piliers prothétique qui présentent une plage prédéterminée de dimensions de longueurs, en particulier entre 8 et 14 mm, et une plage prédéterminée de dimensions de diamètres, en particulier entre 3.3 et 4.7 mm. Ces plages permettent de proposer des combinaisons de packs implant et de packs prothèse qui correspondent à la plupart des cas cliniques (80 % de cas cliniques), proposant une standardisation des implants dentaires selon les cas généraux qui se présentent chez la plupart des patients. Ce choix de dimensions permet que le nombre de trousses dans l'ensemble soit réduit, présentant ainsi les avantages de la réduction du temps de sélection des packs, la réduction des coûts de l'investissement de matériel pour un cabinet dentaire, et la réduction des sources d'erreurs.

Suivant une forme avantageuse de l'ensemble de trousses suivant l'invention, le nombre prédéterminé de trousses d'implantologie dentaire est égal à vingt-quatre. Ceci au lieu de plusieurs centaines, comme c'est le cas dans l'art antérieur. Ainsi, le dentiste ou le spécialiste dentaire réduit l'investissement en matériel pour équiper son cabinet vu que le nombre de packs est considérablement réduit. L'ensemble de trousses proposées font qu'il n'a plus besoin d'avoir un grand stock de matériel dans son cabinet. Les trousses présentent les combinaisons de packs implant et de packs prothèse qui correspondent à la plupart des traitements, c'est-à-dire qu'à partir de deux critères, les dimensions de l'implant et la solution prothétique, le dentiste ou le spécialiste peut répondre au 80 % des cas cliniques.

En particulier, selon une forme de réalisation de l'ensemble de trousses suivant l'invention, le mandrin est également agencé pour prendre prise tant dans la vis de couverture que dans la vis de cicatrisation. Ainsi, le mandrin peut également être utilisé comme tournevis, ceci étant complémentaire à l'utilisation habituelle du mandrin qui permet au dentiste ou au spécialiste dentaire de manipuler l'implant dentaire. Le mandrin lui permet tant la préhension que la pose de l'implant dentaire dans l'os des maxillaires sans devoir toucher manuellement à l'implant.

De préférence, dans l'ensemble de trousses suivant l'invention le pack implant comprend un moyen de serrage, en particulier une clé hexagonal, permettant un serrage manuel de l'implant dentaire lors de l'implantation dans l'os. Ce moyen de serrage utilisé de manière manuelle par le dentiste ou le spécialiste dentaire permet le serrage de l'implant seulement en utilisant sa main. Le profil du moyen de serrage présente un profil épousant celui de l'élément de prise mécanique de l'implant dentaire, afin que le dentiste ou le spécialiste dentaire puisse y insérer l'implant et le visser dans l'os, Ce moyen de serrage peut avoir la forme d'une clé hexagonale et permet que le pack implant comprenne toutes les pièces et les outils nécessaires pour la mise en place d'un implant dentaire. Ceci est particulièrement convenable dans les situations dans lesquelles le dentiste ou le spécialiste dentaire fait face à des conditions peu favorisantes, par exemple quand il doit réaliser sa pratique dans un cabinet temporel où il n'y a pas d'électricité, comme dans un lointain village. Ainsi, l'invention peut vraiment généraliser la pratique de l'implantologie en étant aussi à portée des moins favorisés.

Avantageusement, dans l'ensemble de trousses suivant l'invention, la partie extra-implantaire du pilier prothétique est configurée sous forme d'un organe d'attachement agencé pour y appliquer directement une prothèse dentaire. Cette partie extra- implantaire peut présenter la forme d'un faux moignon agencé pour y recevoir directement une prothèse dentaire et permettre que la prothèse dentaire soit bien fixée et donc stable.

De manière avantageuse, dans l'ensemble de trousses suivant l'invention, le pilier prothétique du pack prothèse dit « fixe » est un pilier prothétique conique permettant la fixation d'une couronne ou d'un bridge.

De manière avantageuse, dans l'ensemble de trousses suivant l'invention, le pilier prothétique du pack prothèse dit « amovible » est un pilier prothétique sphérique permettant la fixation d'un dentier.

Le choix entre les solutions prothétiques, un pilier prothétique conique ou un pilier prothétique sphérique, permet au dentiste ou au spécialiste dentaire de mieux cibler le traitement pour répondre au besoin du patient.

En particulier, selon une forme de réalisation de l'ensemble de trousses suivant l'invention, chaque pack implant est à usage unique et stérile, et chaque pack prothèse est à usage unique. Le dentiste ou spécialiste dentaire utilise les pièces fournies dans la trousse sélectionnée selon le cas clinique, une fois que l'implant est implanté il jette le pack implant, de même qu'une fois que la prothèse est mise en place il jette le pack prothèse. Ceci évite le besoin de stérilisation et de stock de packs, évitant aussi l'usure des pièces et garantit que la qualité des pièces soit irréprochable.

De plus, dans un mode de réalisation préférentiel en suivant l'invention, le pilier prothétique du pack prothèse est un pilier prothétique en titane. Ce pilier est de préférence à sceller ou à coller dans l'implant dentaire. En particulier, le scellement est une pratique courante pour les dentistes de formation générale. Ainsi la pratique de l'implantologie dentaire basée sur le scellement du pilier prothétique devient aussi une pratique courante. Ainsi l'implantologie dentaire considérée comme une technique ayant besoin d'une spécialisation particulière peut devenir une technique a base de procédures connues pour les dentistes en général. Aujourd'hui le titane est couramment utilisé pour fabriquer les piliers prothétiques, car c'est un matériel qui est bien accepté par le corps humain.

En particulier, selon une forme de réalisation de l'ensemble de trousses suivant l'invention, la partie extra-implantaire du pilier calcinable est formé par deux cubes aplatis reliés par un cylindre. Ceci étant particulièrement utile lorsque ce pilier fait office de transfert d'empreinte.

L'invention sera maintenant décrite plus en détails à l'aide des dessins qui illustrent une forme de réalisation préférée de l'ensemble de trousses. Dans les dessins :
la figure 1 illustre une trousse d'implantologie dentaire suivant l'invention comprenant un pack implant et un pack prothèse ; et
la figure 2 montre un schéma pour illustrer qu'à chacune des trousses d'implantologie dentaire est chaque fois attribué un diamètre et une longueur respective d'un implant, le pack implant, et une solution prothétique, fixe ou amovible, le pack prothèse.

Dans les dessins une même référence a été attribuée à un même élément ou à un élément analogue.

Dans la description qui suit, par praticien nous comprenons le dentiste ou le spécialiste dentaire ou autre personne qui réalise une procédure d'implantologie dentaire en utilisant l'ensemble de trousses d'implantologie dentaire selon l'invention. Par pack nous comprenons à la foie les packs implants 20 et les packs prothèse 30 qui sont combinés dans une trousse d'implantologie dentaire 10.

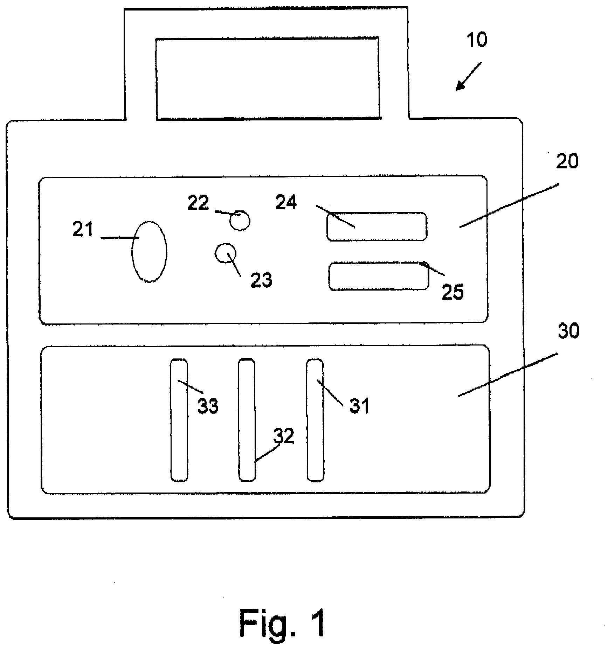

La figure 1 illustre de façon schématique une des trousses d'implantologie dentaire 10 faisant partie de l'ensemble de trousses suivant l'invention. Ainsi, la figure 1 illustre un pack implant 20 présentant un implant dentaire ayant un diamètre et une longueur déterminée, et un pack prothèse 30 présentant une solution prothétique fixe ou amovible dont la dimension est compatible avec celle de implant dentaire présent dans le pack implant 20.

Un implant dentaire 21 est destiné à être mis en place dans l'os des maxillaires, et peut être totalement ou partiellement enfoui dans l'os, chez des patients partiellement ou totalement édentés, en vue d'une restauration prothétique dans les cas d'édentement unitaire, édentement intercalaire, édentement terminal, édentement total, ou stabilisation d'une prothèse amovible.

Chaque pack implant 20 comprend l'implant dentaire 21 présentant chaque fois un diamètre (∅) et une longueur (L) bien définie. Le pack implant 20 comprend aussi une vis de couverture 22 et une vis de cicatrisation 23 lesquelles ont une dimension telle qu'elles peuvent être vissées dans l'implant dentaire 21. Un foret terminal 24, qui permet de perforer dans l'os des mâchoires à l'endroit où l'implant dentaire 21 doit être implanté fait également partie du pack. Le foret 24 a une dimension compatible à celle de l'implant dentaire 21. Le pack comprend également un mandrin 25, qui peut non seulement s'insérer dans l'implant dentaire 21 afin qu'il soit manipulable par le praticien, mais de préférence aussi servir à visser les vis 22 et 23 dans l'implant dentaire. Ce pack peut aussi comprendre un moyen de serrage 26, par exemple une clé hexagonale, permettant la mise en place manuelle de l'implant dentaire 21.

Le pack prothèse 30 comprend un pilier prothétique 31 standardisé présentant une partie intra-implantaire agencée pour être fixée, de préférence par scellement ou collage, dans l'implant dentaire 21, et une partie extra-implantaire sur laquelle sera fixée une prothèse dentaire. Ce pilier prothétique 31 peut être conique et destiné à recevoir une prothèse fixe, ou bien il peut être sphérique et destiné à recevoir une prothèse amovible. Par un pilier prothétique 31 standardisé on entend un pilier prothétique agencé pour être posé essentiellement dans l'axe de l'implant.

Dans les packs prothèse 30, la partie intra-implantaire des piliers prothétiques 31, que ce soit pour prothèse fixe ou amovible, est adaptée à la longueur et au diamètre de l'implant dentaire 21 auxquels ils sont associés. De plus, dans le pack prothèse 30 présentant un pilier prothétique 31 conique pour une solution prothétique fixe, la partie extra-implantaire du pilier prothétique 31 est adaptée au diamètre de l'implant dentaire 21 auquel il est associé.

Un pilier calcinable 32 est aussi compris dans le pack prothèse 30. Le pilier calcinable a une partie intra-implantaire agencée pour reproduire la partie destinée à être insérée dans l'implant dentaire 21 ou l'homologue/analogue d'implant 33 auxquels il est associé, et une partie extra-implantaire. La partie extra-implantaire de ce pilier calcinable 32 est agencée pour réaliser un pilier prothétique ayant une angulation, une forme et une hauteur adaptée à ladite arcade dentaire. La partie extra-implantaire de ce pilier calcinable comporte de préférence un organe de transfert d'empreinte qui est par exemple formé par deux cubes aplatis reliés par un cylindre. Ce qui fait de ce pilier calcinable 32 une pièce servant à la fois de transfert d'empreinte pour reproduire ultérieurement la situation buccale au laboratoire de prothèse, et servant également à la réalisation d'un pilier personnalisé coulé en métal et adapté à l'arcade dentaire du patient. Le pack prothèse 30 comprend aussi un homologue/analogue de l'implant dentaire 33, agencé pour recevoir la partie intra-implantaire du pilier calcinable 32. Cet homologue/analogue 33 est destiné à reproduire la position exacte l'implant sur un modèle de laboratoire, recevant ainsi le pilier calcinable 32 pour fabriquer le pilier personnalisé qui sera scellé dans l'implant dentaire 21.

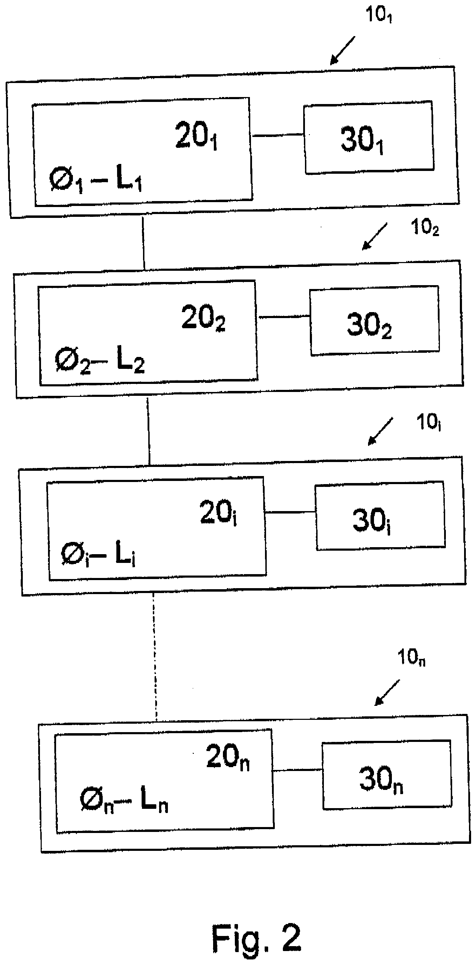

La figure 2 montre un schéma pour illustrer comment à chacune des trousses d'implantologie dentaire 10 est chaque fois attribué un diamètre (∅) et une longueur (*L*) respective d'un implant dentaire 21, déterminant la combinaison du pack Implant 20 et du pack prothèse 30. La combinaison de ce diamètre (∅) et de cette longueur (*L*) est choisie parmi les plages de diamètres (∅) et longueurs (*L*) qui correspondent à la plupart des cas cliniques comme mentionné au préalable.

Les dimensions de longueurs (*L*) pour les packs implant 20 sont choisies entre une plage prédéterminée de dimensions de longueurs (*L*), en particulier une plage entre 8 et 14 mm. Ainsi, les longueurs (*L*) les plus couramment utilisées sont 8, 10, 12, et 14 mm. A ces longueurs (*L*) d'implant sont assignés des diamètres (∅) repris dans une plage prédéterminée de dimensions de diamètres (∅), en particulier entre 3,3 et 4,7 mm. Par exemple: un pack implant 20 comprenant un implant dentaire 21 présentant une longueur de 8 mm et un diamètre de 3,3 mm, ou bien un implant dentaire 21 présentant une longueur de 8 mm et un diamètre de 4,7 mm.

L'ensemble des packs prothèse 30 comprend des packs proposant des solutions fixes, par exemple pour poser une couronne ou un bridge, et des packs proposant des solutions amovibles, par exemple pour stabiliser un dentier. Selon un mode de réalisation préférentiel de l'invention, le pack prothèse 30 qui répond aux solutions fixes comprend un pilier prothétique 31 en titane de forme conique, celui-ci est un pilier d'utilisation répandue. Il est à noter que les développements en matériaux pourront proposer d'autres matériaux pour la fabrication des piliers prothétiques 31.

Lorsque l'implant 21, une fois posé, présente un axe d'émergence incompatible avec une réalisation prothétique standardisée, on a recours à un pilier personnalisé angulé. Dans ce cas, un pilier calcinable 32 est utilisé et façonné au laboratoire pour obtenir une angulation compatible avec une solution ou réhabilitation prothétique adaptée à l'arcade dentaire du patient.

L'homologue/analogue 33 de l'implant dentaire permet de reproduire la position de l'implant dentaire 21 implanté dans l'os sur un modèle en plâtre au laboratoire, ceci grâce à l'utilisation du pilier calcinable 32 qui fait office de transfert d'empreinte. Ainsi, le laboratoire de prothèse peut façonner une couronne ou un bridge à partir du modèle de la bouche obtenu en ayant le pilier calcinable 32 et en l'introduisant dans l'implant dentaire 21 en suivant la forme de la solution ou réhabilitation prothétique souhaitée.

Pour déterminer la trousse qui convient au patient, à partir d'une radiographie de l'os des mâchoires à l'endroit où l'implant dentaire 21 doit être implanté, le praticien évalue le volume osseux disponible à l'endroit où l'implant doit être appliqué. Ainsi, en utilisant cette évaluation du volume osseux, il détermine quelle est la combinaison de diamètre (∅) et de longueur (L) de l'implant dentaire 21 à implanter. Avec cette évaluation, et selon la solution prothétique souhaitée, fixe ou amovible, il choisit parmi les options proposées dans l'ensemble de trousses, celle qui correspond à l'implant dentaire 21 qui doit être implanté. Une fois qu'il connaît cette combinaison qui correspond à l'implant dentaire 21 dont il a besoin, il peut commander et acheter la trousse 10 à usage unique comprenant seulement le pack implant 20 et le pack prothèse 30 ayant le diamètre et la longueur choisi qui permettent de traiter le patient. Dans cette trousse 10 il trouvera tous les éléments nécessaires pour réaliser la pose de l'implant dentaire 21 et permettre la réhabilitation prothétique de son patient. Après l'utilisation de la trousse 10 le praticien devra jeter le reste du matériel qui a été exposé et qui n'est pas implanté dans la bouche du patient.

Ceci signifie qu'une fois que le praticien a déterminé la combinaison de diamètre (∅) et de longueur (*L*) de l'implant dentaire 21 dont il a besoin à partir de l'évaluation du volume osseux obtenue à l'aide de la radiographie, il a également choisit le pilier prothétique 31, conique ou sphérique, qu'il va utiliser dans l'implant dentaire 21 choisi. C'est-à-dire que les dimensions de l'implant dentaire 21 déterminées comme appropriées pour le cas en traitement, vont correspondre à une longueur prédéfinie de la partie intra-implantaire du pilier prothétique 31 qui se trouve dans le pack prothèse 30 qui est lié au pack implant 20. Ainsi, chaque pack implant 20 est lié à un pack prothèse 30 qui lui correspond pour chaque patient.

Donc, l'ensemble de trousses est limité par un nombre prédéterminé de trousses 10 comprenant des packs implant 20 et des packs prothèse 30 présentant des combinaisons prédéterminées d'un diamètre (∅) et d'une longueur (*L*). Dans la figure 2 l'ensemble de trousses d'implantologie dentaire est illustré à l'aide de *n* trousses 10₁, 10₂, 10ₗ et 10ₙ. Une première trousse 10₁ combine un premier pack implant 20₁ et un premier pack prothèse 30₁ pour une combinaison d'un premier diamètre ∅₁ et d'une première longueur *L*₁ d'un implant dentaire 21 dans le pack implant 20₁, et répond à une sélection entre une solution prothétique fixe ou amovible pour le pack prothèse 30₁.

Une deuxième trousse 10₂ combine un deuxième pack implant 20₂ et un deuxième pack prothèse 30₂. Cette combinaison répond à la combinaison d'un deuxième diamètre ∅₂ et d'une deuxième longueur *L*₂ d'un implant dentaire 21 dans le pack implant 20₂, et répond à une sélection entre une solution prothétique fixe ou amovible pour le pack prothèse 30₂. Et ainsi de suite jusqu'à une trousse 10*ₙ* combinant un pack implant 20*ₙ* et un pack prothèse 30*ₙ*. Cette combinaison répondant à la combinaison d'un diamètre ∅*ₙ* et d'une longueur *Lₙ* d'un implant dentaire 21 dans le pack implant 20*ₙ*, et répond à une sélection entre une solution prothétique fixe ou amovible pour le pack prothèse 30*ₙ*.

Suivant un mode de réalisation préférentiel de l'invention, les packs implant et les packs prothèse sont combinés pour former l'ensemble de vingt-quatre trousses prédéterminées afin d'offrir au praticien les trousses nécessaires pour qu'il réalise les procédures d'implantologie dentaire en répondant à au moins 80 % des cas cliniques. Les combinaisons possibles se font entre douze packs implant 20 correspondants aux plages prédéterminées de diamètres (∅), en particulier entre 3.3 et 4.7 mm, et de longueurs (*L*), en particulier entre 8 et 14 mm, et deux packs prothèse 30 correspondants aux solutions prothétiques fixes ou amovibles. Les douze packs implant 20 sont formés par les combinaisons de dimensions de diamètre et de longueur suivantes: ∅ = 3.3 mm et L = 8, 10, 12 ou 14 mm, ∅ = 3.9 mm et L = 8,10,12 ou 14 mm, ∅ = 4.7 mm et L = 8, 10, 12 ou 14 mm. C'est-à-dire, que l'ensemble de 24 trousses est obtenu par la combinaison de douze packs implant 20 multipliés par deux packs prothèse 30.

L'invention propose ces trousses 10 à usage unique, ainsi les praticiens n'ont plus besoin de trousses chirurgicales et prothétiques avec de multiples pièces à nettoyer et à stériliser une première fois et re-stériliser pour les utilisations ultérieures, ceci évite les problèmes d'asepsie, de traçabilité, d'usure, causés par la multiplication des interventions. En utilisant ces trousses 10 le praticien optimise le nombre de procédures qu'il peut réaliser dans une journée de travail ayant à sa disposition tout le matériel nécessaire pour ceci.

Le protocole que suit le praticien pour réaliser la procédure d'implantologie dentaire qui lui permet de poser un implant dentaire 21 en utilisant l'ensemble des trousses d'implantologie dentaire selon l'invention, consiste généralement en trois étapes : la mise en place chirurgicale de l'implant dentaire 21, la cicatrisation osseuse et des tissus mous, et la mise en fonction de l'implant dentaire 21.

La mise en place chirurgicale de l'implant dentaire 21 comprend la séquence instrumentale rotative utilisant le foret terminal 24 pour trépaner l'os. Une fois que l'os est préparé à recevoir l'implant dentaire 21, à l'aide du mandrin 25 le praticien prélève l'implant dentaire 21 compris dans le pack implant 20 qu'il a choisi selon le diamètre (∅) et la longueur (*L*) mesurés, et il le visse dans l'os à l'endroit où il a foré. Il peut utiliser également la clé hexagonale fournie dans le pack implant 20 pour une mise en place manuelle de l'implant dentaire 21. Ensuite, le praticien à l'aide du même mandrin 25 prélève la vis de couverture 22 ou de cicatrisation 23 aussi comprise dans le pack implant 20 et obture l'implant dentaire 21.

Après le délai nécessaire à la cicatrisation osseuse pour obtenir l'ostéointégration qui varie entre 3 à 6 mois, l'implant dentaire 21 présente une fixité clinique permettant la phase prothétique. Pour la mise en fonction de l'implant dentaire 21, de préférence, le pilier prothétique 31 est scellé ou collé dans l'implant dentaire 21. Ensuite, une prise d'empreinte de ce pilier prothétique 31, ou dans le cas d'un pilier personnalisé l'empreinte du pilier calcinable 32, permet au technicien de laboratoire d'élaborer la couronne, le pont (bridge) ou le dentier, selon le traitement.

## Revendications

1. Ensemble de trousses d'implantologie dentaire comprenant un nombre prédéterminé de trousses d'implantologie dentaire, chaque trousse d'implantologie dentaire (10) comprenant un implant dentaire (21) et un transfert d'empreinte servant à reproduire sur un modèle de laboratoire une situation buccale de l'implant après son application sur un patient afin de réaliser un pilier prothétique adapté à l'arcade dentaire du patient, **caractérisé en ce que** l'implant dentaire fait partie d'un pack implant (20) et le transfert d'empreinte fait partie d'un pack prothèse (30), dans chaque trousse d'implantologie dentaire (10):
- ledit pack implant comprend également:
- une vis de couverture (22) et une vis de cicatrisation (23) agencées pour être vissées dans l'implant dentaire (21) ;
- un foret terminal (24) agencé pour perforer dans les os de la mâchoire à l'endroit où l'implant dentaire (21) doit être implanté, le foret terminal (24) ayant une dimension compatible à celle de l'implant dentaire (21) ; et
- un mandrin (25) agencé pour s'insérer dans l'implant dentaire et permettre ainsi la pose de l'implant dentaire dans l'os de la mâchoire ;
- ledit pack prothèse (30) comprenant également:
- un pilier calcinable (32) pourvu d'une partie intra-implantaire agencée pour reproduire la partie destinée à être insérée dans l'implant dentaire (21), et d'une partie extra-implantaire agencée pour réaliser un pilier prothétique ayant une angulation, une forme et une hauteur adaptées à ladite arcade dentaire ;
- un pilier prothétique (31) standardisé pour une prothèse fixe ou pour une prothèse amovible et ayant une partie intra-implantaire agencée pour être scellée ou collée dans l'implant dentaire (21), et une partie extra-implantaire agencée pour y fixer une prothèse dentaire ; et
- un homologue/analogue (33) de l'implant dentaire agencé pour recevoir la partie intra-implantaire du pilier calcinable (32) ou du pilier prothétique standardisé (31);
à chacune des trousses d'implantologie dentaire (10) est chaque fois attribué un diamètre (∅) et une longueur (*L*) respective de l'implant dentaire (21), du pilier prothétique standardisé et du pilier calcinable sélectionnés parmi un nombre prédéterminé et limité de combinaisons de longueurs (*L*) et de diamètres (∅) d'implant dentaire.

2. Ensemble de trousses d'implantologie dentaire selon la revendication 1, dans lequel les combinaisons de longueurs (*L*) et de diamètres (∅) d'implant dentaire et de piliers sont choisis parmi des implants dentaires (21) qui présentent une plage prédéterminée de dimensions de diamètre (∅), en particulier entre 3,3 et 4,7 mm, et une plage prédéterminée de dimensions de longueur (*L*), en particulier entre 8 et 14 mm.

3. Ensemble de trousses d'implantologie dentaire selon l'une des revendications 1 ou 2, dans lequel le nombre prédéterminé de trousses d'implantologie dentaire (10) est égal à vingt-quatre.

4. Ensemble de trousses d'implantologie dentaire selon l'une des revendications 1 à 3, dans lequel le mandrin (25) est également agencé pour prendre prise tant dans la vis de couverture (22) que dans la vis de cicatrisation (23).

5. Ensemble de trousses d'implantologie dentaire selon l'une des revendications 1 à 4, dans lequel le pack implant (20) comprend un moyen de serrage (26), en particulier une clé hexagonale, permettant un serrage manuel de l'implant dentaire (21) lors de l'implantation dans l'os de la mâchoire.

6. Ensemble de trousses d'implantologie dentaire selon l'une des revendications 1 à 5, dans lequel la partie extra-implantaire du pilier prothétique (31) est configurée sous forme d'un organe d'attachement agencé pour y appliquer directement une prothèse dentaire.

7. Ensemble de trousses d'implantologie dentaire selon l'une des revendications 1 à 6, dans lequel le pilier prothétique (31) du pack prothèse (30) est un pilier prothétique conique permettant la fixation d'une couronne ou d'un bridge.

8. Ensemble de trousses d'implantologie dentaire selon l'une des revendications 1 à 7, dans lequel le pilier prothétique (31) du pack prothèse (30) est un pilier prothétique sphérique permettant la fixation d'un dentier.

9. Ensemble de trousses d'implantologie dentaire selon l'une des revendications 1 à 8, dans lequel la partie extra-implantaire du pilier calcinable (32) est formé par deux cubes aplatis reliés par un cylindre.

10. Ensemble de trousses d'implantologie dentaire selon l'une des revendications 1 à 9, dans lequel le pilier prothétique (31) du pack prothèse (30) est un pilier prothétique en titane.

## Patentansprüche

1. Einheit von dentale Implantologie Instrumentensätzen, die eine vorbestimmte Anzahl von dentale Implantologie Instrumentensätzen umfasst, wobei jeder Instrumentensatz für dentale Implantologie (10) ein Dentalimplantat (21) und eine Abformübertragung umfasst, die zur Reproduktion auf ein Labormodell einer Mundsituation des Implantats nach ihrer Anwendung auf einen Patienten dient, um ein an den Dentalbogen des Patienten angepasstes prothetischen Abutment herzustellen, **dadurch gekennzeichnet, dass** das Dentalimplantat Teil einer Implantatpackung (20) ist, und die Abformübertragung ein Teil einer Prothesenpackung (30) in jedem dentale Implantologie Instrumentensatz (10) ist:
- wobei die Implantatpackung auch umfasst:
- eine Deckschraube (22) und eine Heilschraube (23), die zum Einschrauben in das Dentalimplantat (21) angeordnet sind;
- einen Stirnbohrer (24), der zum Bohren in den Kieferknochen an der Stelle angeordnet ist, an der das Dentalimplantat (21) eingesetzt werden soll, wobei der Stirnbohrer (24) eine Größe aufweist, die mit der des Dentalimplantats (21) kompatibel ist; und
- einen Dorn (25), der angeordnet ist, um in das Dentalimplantat eingeführt zu werden, und dadurch das Einsetzen des Dentalimplantats in den Kieferknochen ermöglicht;
- wobei die Prothesenpackung (30) auch umfasst:
- ein ausbrennbares Abutment (32), der mit einem innernen Implantatabschnitt versehen ist, der angeordnet ist, um den Abschnitt zu reproduzieren, der dazu bestimmt ist, in das Dentalimplantat (21) eingeführt zu werden, und mit einem äußeren Implantatabschnitt, der angeordnet ist, um ein prothetisches Abutment herzustellen, der einen Winkel, eine Form und eine Höhe aufweist, die an den Dentalbogen angepasst sind;
- ein standardisiertes prothetisches Abutment (31) für eine feste Prothese oder für eine herausnehmbare Prothese und der einen innernen Implantatabschnitt aufweist, der so angeordnet ist, dass er in das Dentalimplantat (21) versiegelt oder eingeklebt wird, und einen äußeren Implantatabschnitt, der so angeordnet ist, dass daran eine Dentalprothese anbringbar ist; und
- ein Homolog/Analog (33) des Dentalimplantats, das angeordnet ist, um den innernen Implantatabschnitt des ausbrennbaren Abutments (32) oder des standardisierten prothetischen Abutments (31) aufzunehmen;
wobei jedem der Instrumentensätze für dentale Implantologie (10) jeweils ein entsprechender Durchmesser (∅) und eine entsprechende Länge (L) des Dentalimplantats (21), des standardisierten prothetischen Abutments und des ausbrennbaren Abutments zugeordnet sind, die aus einer vorbestimmten und begrenzten Anzahl von Kombinationen von Dentalimplantatlängen (L) und -durchmessern (∅) auswählbar sind.

2. Einheit von dentale Implantologie Instrumentensätzen nach Anspruch 1, wobei die Kombinationen von Längen (L) und Durchmessern (∅) von Dentalimplantaten und Abutments ausgewählt sind aus Dentalimplantaten (21), die einen vorbestimmten Bereich von Durchmessermaßen (∅), insbesondere zwischen 3,3 und 4,7 mm, und einen vorbestimmten Bereich von Längenmaßen (L), insbesondere zwischen 8 und 14 mm vorweisen.

3. Einheit von dentale Implantologie Instrumentensätzen nach einem der Ansprüche 1 oder 2, wobei die vorbestimmte Anzahl von dentale Implantologie Instrumentensätzen (10) gleich vierundzwanzig ist.

4. Einheit von dentale Implantologie Instrumentensätzen nach einem der Ansprüche 1 bis 3, wobei der Dorn (25) auch so angeordnet ist, dass es sowohl mit der Deckschraube (22) als auch mit der Heilschraube (23) in Eingriff steht.

5. Einheit von dentale Implantologie Instrumentensätzen nach einem der Ansprüche 1 bis 4, wobei die Implantatpackung (20) ein Spannmittel (26), insbesondere einen Sechskantschlüssel umfasst, das ein manuelles Spannen des Dentalimplantats (21) während der Implantation in den Kieferknochen ermöglicht.

6. Einheit von dentale Implantologie Instrumentensätzen nach einem der Ansprüche 1 bis 5, wobei der äußere Implantatabschnitt des prothetischen Abutments (31) in Form eines Befestigungsorgans ausgebildet ist, das angeordnet ist, um eine Dentalprothese direkt darauf aufzubringen.

7. Einheit von dentale Implantologie Instrumentensätzen nach einem der Ansprüche 1 bis 6, wobei das prothetische Abutment (31) der Prothesenpackung (30) ein konisches prothetisches Abutment ist, welches das Fixieren einer Krone oder einer Brücke ermöglicht.

8. Einheit von dentale Implantologie Instrumentensätzen nach einem der Ansprüche 1 bis 7, wobei das prothetische Abutment (31) der Prothesenpackung (30) ein sphärisches prothetisches Abutment ist, welches das Fixieren eines Dentalersatzes ermöglicht.

9. Einheit von dentale Implantologie Instrumentensätzen nach einem der Ansprüche 1 bis 8, wobei der äußere Implantatabschnitt des ausbrennbaren Abutments (32) durch zwei abgeflachte Würfel gebildet wird, die miteinander durch einen Zylinder verbunden sind.

10. Einheit von dentale Implantologie Instrumentensätzen nach einem der Ansprüche 1 bis 9, wobei das prothetische Abutment (31) der Prothesenpackung (30) ein prothetisches Abutment aus Titan ist.

## Claims

1. A set of dental implantation kits comprising a predetermined number of dental implantation kits, each dental implantation kit (10) comprising a dental implant (21) and a transfer coping used for reproducing on a laboratory model a situation in a mouth of the implant after its application on a patient in order to realise a prosthetic abutment adapted to the dental arch of the patient, **characterised in that** the dental implant is part of an implant pack (20) and the transfer coping is part of a prosthetic pack (30), in each dental implantation kit (10):
- said implant pack also comprising :
- a cover screw (22) and a healing screw (23) provided for being screwed on the dental implant (21);
- a terminal drill (24) provided for drilling into the jawbone at a place where the dental implant (21) has to be implanted, the terminal drill (24) having a dimension compatible with the one of the dental implant (21); and
a screwing tool (25) provided for inserting in the dental implant and enabling in such a manner the placing of the dental implant in the jawbone;
- said prosthetic pack (30) also comprising:
- a castable abutment (32) having an intra-implant part provided for reproducing the part foreseen to be inserted in the dental implant (21), and an extra-implant part provided for realising a prosthetic abutment having an angulation, a shape and a height adapted to said dental arch;
- a standardised prosthetic abutment (31) for a fixed prosthesis or for a removable prosthesis and having an intra-implant part provided for being sealed or glued in the dental implant (21), and an extra-implant part provided for fixing thereon a dental prosthesis; and
- an homologous/analogous (33) of the dental implant provided for receiving the intra-implant part of the castable abutment (32) or the standardised prosthetic abutment (31);
to each of said dental implantation kits there is each time allotted a respective diameter (Φ) and a length (L) of the dental implant (21), the standardised prosthetic abutment and the castable abutment being selected among a predetermined and limited number of combinations of dental implant length (L) and diameters (Φ).

2. The set of dental implantation kits according to claim 1, wherein the combinations of lengths (L) and diameters (Φ) of the dental implants and the abutments are selected among dental implants presenting a predetermined range of diameters (Φ), in particular between 3.3 and 4.7 mm, and a predetermined ranges of dimensions of lengths (L), in particular between 8 and 14mm.

3. The set of dental implantation kits according to claim 1 or 2, wherein the number of predetermined dental implantation kits is equal to twenty four.

4. The set of dental implantation kits according to any one of the claims 1 to 3, wherein the screwing tool (25) is also provided for gripping as well in the cover screw 22 as in the healing screw (23).

5. The set of dental implantation kits according to any one of the claims 1 to 4, wherein the implant pack (20) comprises a clamping means (26), in particular a hexagonal key, enabling a manual clamping of the dental implant (21) during implantation in the bone.

6. The set of dental implantation kits according to any one of the claims 1 to 5, wherein the extra-implant part of the prosthetic abutment (31) is configured as an attachment member provided for applying directly thereon a dental prosthesis.

7. The set of dental implantation kits according to any one of the claims 1 to 6, wherein the prosthetic abutment (31) of the prosthetic pack (30) is a conical abutment enabling the fixation of a crown or a bridge.

8. The set of dental implantation kits according to any one of the claims 1 to 7, wherein the prosthetic abutment (31) of the prosthetic pack (30) is a spherical prosthetic abutment enabling the stabilization of a denture.

9. The set of dental implantation kits according to any one of the claims 1 to 8, wherein the extra implant part of the castable abutment (32) is formed by two flattened cubes linked to each other by a cylinder.

10. The set of dental implantation kits according to any one of the claims 1 to 9, wherein the prosthetic abutment (31) of the prosthetic pack (30) is a prosthetic abutment in titanium.
